# EUROPÄISCHE PATENTSCHRIFT

(11) **EP 0 539 560 B1**
(45) Veröffentlichungstag und Bekanntmachung des Hinweises auf die Patenterteilung: **16.08.1995**
(21) Anmeldenummer: 92910466.9
(22) Anmeldetag: 20.05.1992
(51) Int. Cl.: B60S 1/34, B60S 1/52

(54) **WISCH- UND WASCHANLAGE, INSBESONDERE FÜR SCHEIBEN VON KRAFTFAHRZEUGEN**
WASH-WIPE INSTALLATION, ESPECIALLY FOR MOTOR VEHICLE WINDSCREENS
SYSTEME DE LAVE/ESSUIE-GLACE, EN PARTICULIER POUR LES PARE-BRISE DE VEHICULES AUTOMOBILES

(30) Priorität: 25.05.1991 DE 4117109
(43) Veröffentlichungstag der Anmeldung: 05.05.1993
(73) Patentinhaber: ITT Automotive Europe GmbH, 60488 Frankfurt am Main (DE)
(72) Erfinder: EDELE, Reinhard, D-7123 Sachsenheim 2 (DE); JOHANNES, Reinhard, D-7101 Eberstadt-Hölzern (DE); KRIZEK, Oldrich, D-7120 Bietigheim-Bissingen (DE); SCHMID, Eckhardt, D-7129 Brachkenheim (DE)
(86) Internationale Anmeldenummer: EP9201116
(87) Internationale Veröffentlichungsnummer: WO9221535

(56) Entgegenhaltungen:
- EP-A- 0 351 527
- DE-A- 3 907 980
- FR-A- 2 159 967
- FR-A- 2 585 311
- GB-A- 2 206 483

## Beschreibung

Die Erfindung geht aus von einer Wisch- und Waschanlage, die insbesondere für Scheiben von Kraftfahrzeugen verwendet wird (die gemäß der DE-A-3 907 980 oder der EP-A-0 351 527 gattungsgemäß ausgebildet ist) und die die Merkmale aus dem Oberbegriff des Anspruchs 1 aufweist.

Es sind schon Wisch- und Waschanlagen bekannt, bei denen ein Spritzkopf mit mehreren Waschdüsen an dem Ende eines Wischarms sitzt, an dem das Wischblatt schwenkbar befestigt ist. Der Spritzkopf besitzt zwei Anschlußstutzen, wobei mindestens eine Waschdüse mit dem einen Anschlußstutzen und mindestens eine andere Waschdüse mit dem anderen Anschlußstutzen verbunden ist. Man kann dann die verschiedenen Waschdüsen unabhängig voneinander mit einer Waschflüssigkeit versorgen und insbesondere im Vorlauf und Rücklauf des Wischarms jeweils vor das Wischblatt Waschflüssigkeit spritzen. Dem Spritzkopf kann die Waschflüssigkeit über einen Schlauch zugeführt werden, der zwei voneinander getrennte Kanäle aufweist, am Wischarm entlang verlegt ist und von einem Anschlußstück ausgeht, das im antriebsseitigen Ende des Wischarms untergebracht ist. Um die jeweiligen Waschdüsen in der gewünschten Weise mit Waschflüssigkeit versorgen zu können, ist es notwendig, daß der Schlauch sowohl am Anschlußstück als auch am Spritzkopf richtig angeschlossen ist. Eine Vertauschung der Kanäle könnte dazu führen, daß Waschflüssigkeit nicht jeweils vor, sondern hinter das Wischblatt gespritzt wird.

Der Erfindung liegt die Aufgabe zugrunde, eine Wisch- und Waschanlage mit den Merkmalen aus dem Oberbegriff des Anspruchs 1 so weiterzuentwickeln, daß ein richtiges Anschließen des Schlauches an den Spritzkopf und an das Anschlußstück mit hoher Sicherheit gewährleistet ist.

Diese Aufgabe wird erfindungsgemäß für eine Wisch- und Waschanlage mit den Merkmalen aus dem Oberbegriff des Anspruchs 1 dadurch gelöst, daß am Schlauch einerseits und am Spritzkopf und am Anschlußstück andererseits Mittel zur Codierung der Verbindungen zwischen Schlauch und Spritzkopf sowie Schlauch und Anschlußstück vorgesehen sind.

Vorteilhafte Ausgestaltungen einer erfindungsgemäßen Wisch- und Waschanlage kann man den Unteransprüchen entnehmen.

So wird eine Ausführung besonders bevorzugt, bei der die Mittel zur Codierung zum Ineinandergreifen oder Aneinanderanliegen in ihrer Form aufeinander abgestimmt sind. Durch eine solche Codierung wird das Aufstecken des Schlauches auf den Spritzkopf oder das Anschlußstück in einer anderen als in der richtigen Zuordnung unmöglich gemacht oder zumindest derart erschwert, daß die Wahrscheinlichkeit einer Falschmontage sehr gering ist.

Es ist denkbar, die Stirnseite des Schlauches und entsprechende Mittel am Anschlußstück oder am Spritzkopf so zu gestalten, daß sich der Schlauch in einer falschen Zuordnung nicht vollständig auf die Anschlußstutzen aufschieben läßt. Zum Beispiel könnte die Stirnseite des Schlauches schräg zu dessen Längsrichtung verlaufen und am Anschlußstück oder Spritzkopf ein entsprechend schräger Anschlag für diese Stirnseite vorhanden sein. Insbesondere könnte die Stirnseite derart schräg verlaufen, daß der eine Kanal des Schlauches länger als der andere ist, wobei man dann auch die Ansclußstutzen in Längsrichtung versetzen wird. Günstiger erscheint jedoch eine Lösung, bei der der Schlauch gemäß Anspruch 3 im Querschnitt eine Außenkontur besitzt, die ohne Symmetrie, insbesondere ohne zweizählige Symmetrie ist. Dann können nämlich die Mittel am Anschlußstück oder am Spritzkopf leicht so gestaltet werden, daß schon zu Beginn des Aufsteckvorgangs des Schlauches auf das Anschlußstück oder den Spritzkopf eine falsche Zuordnung bemerkbar ist.

Vorzugsweise wird die Symmetrie durch eine Kerbe gestört, die in Längsrichtung des Schlauches verläuft. Insbesondere wird die Kerbe nicht nur an den Enden des Schlauches vorhanden sein, sondern sich längs des ganzen Schlauches erstrecken. Für die Lage der Kerbe wird der Bereich eines Irennsteges zwischen den beiden Kanälen des Schlauches bevorzugt, da dort eine solche Kerbe ohne Schwächung der Kanalwände vorgesehen werden kann.

Der Schlauch kann natürlich auch zu einem Spritzkopf führen, der an der Karosserie des Kraftfahrzeugs befestigt ist. Ist der Schlauch allerdings entlang eines Wischarms verlegt, so ist es vorteilhaft, wenn die Seite des Schlauchs, an der sich die Kerbe befindet, dem Wischarm zugekehrt ist, so daß die Kerbe nicht sichtbar ist.

Am Anschlußstück oder am Spritzkopf werden die Mittel zur Codierung vorzugsweise durch eine Zunge gebildet, die sich längs am Anschlußstück bzw. Spritzkopf vorhandener Anschlußstutzen erstreckt. Ist der Schlauch mit einer Kerbe versehen, so greift die Zunge in diese Kerbe des Schlauches hinein.

Anschlußstutzen für Schläuche weisen üblicherweise einen Abschnitt auf, in dem sie sich außen kegelförmig erweitern und der in einer Stufe in einen zweiten, mehr rohrförmigen Abschnitt übergeht. Damit im Bereich der Zunge die ursprüngliche Gestalt des Schlauches weitgehend erhalten bleibt, ist gemäß Anspruch 11 vorgesehen, daß in einem der Zunge benachbarten Bereich eines Anschlußstutzens die Stufe niedriger ist als in einem anderen Bereich oder sogar ganz fehlt.

Ein Wischarm einer erfindungsgemäßen Wisch- und Waschanlage ist in den Zeichnungen dargestellt. Anhand der Figuren dieser Zeichnungen wird die Erfindung nun näher erläutert.

Es zeigen:
- Figur 1: den Wischarm in mittig unterbrochener Weise mit einem Spritzkopf an seinem einen Ende und einem Anschlußstück an seinem anderen Ende,
- Figur 2: eine Seitenansicht des Anschlußstückes in einem vergrößerten Maßstab,
- Figur 3: eine Ansicht des Anschlußstückes in Richtung des Pfeiles A aus Figur 2,
- Figur 4: eine Ansicht des Spritzkopfes im Bereich seiner Anschlußstutzen,
- Figur 5: eine Ansicht des Spritzkopfes in Richtung des Pfeiles B aus Figur 4,
- Figur 6: einen Schnitt entlang der Linie VI-VI aus Figur 1 und
- Figur 7: einen Schnitt entlang der Linie VII-VII aus Figur 1.

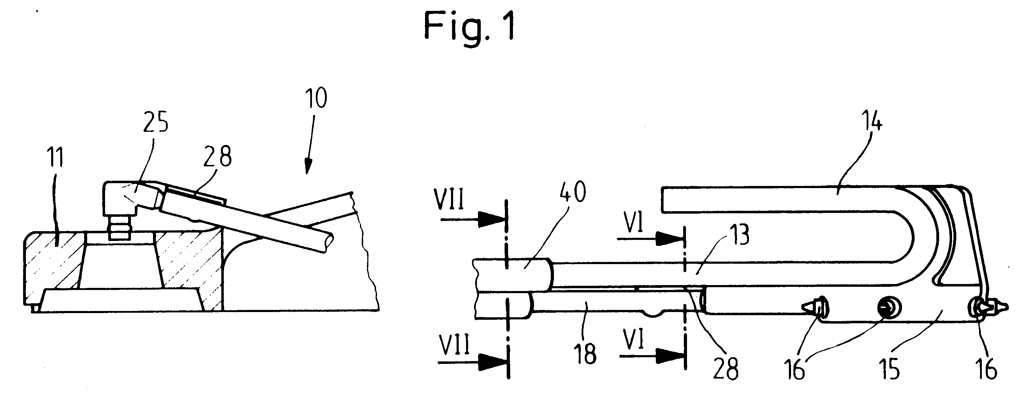

Der Wischarm 10 nach Figur 1 weist in üblicher Weise ein Befestigungsteil 11, mit dem er drehsicher auf einer Wischerwelle befestigt werden kann, ein nicht näher dargestelltes Gelenkteil und eine Wischstange 13 auf, deren freies Ende zu einem Haken 14 gebogen ist, mit dessen Hilfe ein Wischblatt am Wischarm aufgehängt werden kann. Im Bereich des Hakens 14 ist an dem Wischarm 10 ein Spritzkopf 15 befestigt, der insgesamt sechs Waschdüsen 16 aufweist, von denen drei zur einen und drei zur anderen Seite des Wischarms gerichtet sind. Die beiden Gruppen von Waschdüsen sollen getrennt voneinander mit Waschflüssigkeit versorgt werden. Deshalb besitzt der Spritzkopf 15 zwei parallel zueinander von ihm abstehende Anschlußstutzen 17, wobei die eine Gruppe von Waschdüsen über einen innerhalb des Spritzkopfes verlaufenden Kanal mit dem einen Anschlußstutzen und die andere Gruppe von Waschdüsen über einen anderen Kanal mit dem anderen Anschlußstutzen 17 verbunden ist. Auf die Anschlußstutzen 17 des Spritzkopfes 15 ist ein Schlauch 18 mit zwei Kanälen 19 und 20 aufgesteckt.

Der Schlauch 18 ist entlang des Wischarmes 10 verlegt und geht von einem Anschlußstück 25 aus, das im Bereich des Befestigungsteils 11 angeordnet und dafür vorgesehen ist, auf ein zweikanaliges Rohr gesteckt zu werden, das durch die hohl ausgebildete Wischerwelle von innerhalb nach außerhalb der Karosserie eines Kraftfahrzeugs geführt ist. Entsprechend dem Schlauch 18 mit zwei Kanälen besitzt das Anschlußstück 25 ebenso wie der Spritzkopf 15 zwei Anschlußstutzen 17, die, genauso wie die Anschlußstutzen 17 des Spritzkopfes 15, parallel zueinander vom Anschlußstück 25 abstehen und auf die der Schlauch 18 mit seinen Kanälen 19 und 20 aufgeschoben ist.

Im Betrieb der Wisch- und Waschanlage möge die Waschflüssigkeit nun so gesteuert sein, daß bei einer Schwenkbewegung des Wischarms in die eine Richtung eine Gruppe von Waschdüsen und bei einer Schwenkbewegung des Wischarms in die andere Richtung die andere Gruppe von Waschdüsen Waschflüssigkeit auf die Scheibe des Kraftfahrzeugs spritzt. Dabei soll jeweils die Gruppe von Waschdüsen spritzen, die in der augenblicklichen Bewegungsrichtung des Wischarms vorne liegt, so daß Waschflüssigkeit jeweils vor das Wischblatt gelangt. Damit dies passiert, ist es notwendig, daß jeweils entsprechende Anschlußstutzen 17 des Spritzkopfes 15 und des Anschlußstücks 25 miteinander verbunden sind. Ein ganz bestimmter Kanal des Schlauches 18 muß also an die beiden entsprechenden Anschlußstutzen angeschlossen sein. Da der Schlauch 18 flexibel ist, wäre es leicht möglich, daß während der Montage aus Unachtsamkeit der falsche Anschlußstutzen des Spritzkopfes 15 mit einem Anschlußstutzen des Anschlußstücks 25 verbunden wird.

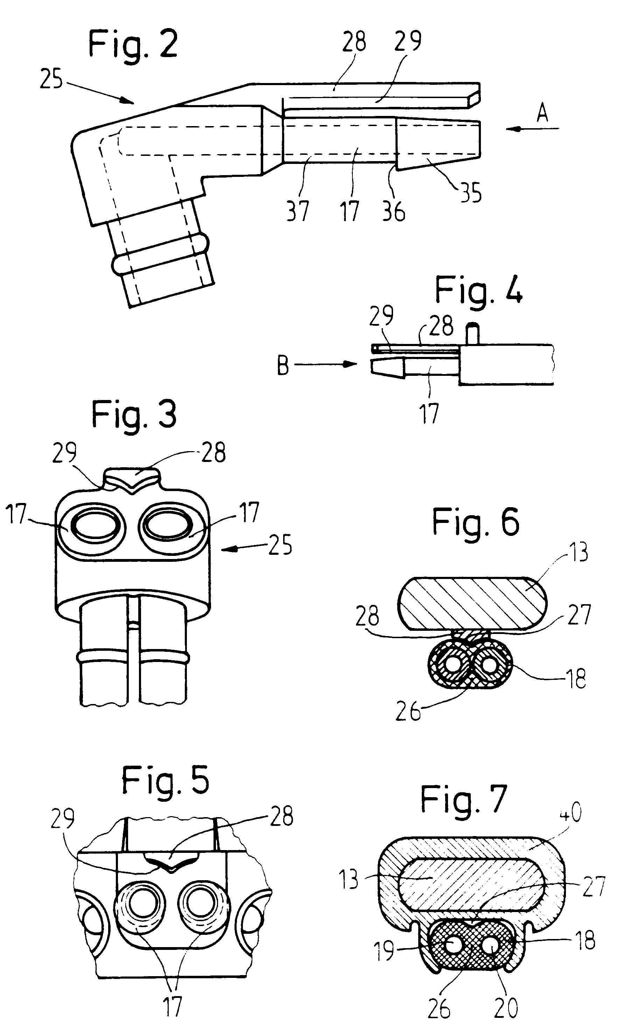

Um die Gefahr einer Fehlmontage zu verhindern, ist die Verbindung zwischen dem Schlauch 18 und dem Spritzkopf 15 bzw. dem Anschlußstutzen 25 codiert. Und zwar besitzt, wie aus den Figuren 6 und 7 hervorgeht, der Schlauch 18 im Bereich des Irennsteges 26 zwischen seinen zwei Kanälen 19 und 20 eine Kerbe 27, die sich über die gesamte Länge des Schlauches 18 erstreckt.

Der Spritzkopf 15 und das Anschlußstück 25 weisen jeweils eine Zunge 28 auf, die in der Mitte zwischen den zwei Anschlußstutzen 17 parallel zu diesen verläuft und, wie aus den Figuren 2 und 4 hervorgeht, auf gleicher Höhe wie die Anschlußstutzen 17 endet. Die dem Schlauch 18 zugewandte Unterseite 29 der Zunge 28 ist mit ihrer satteldachartigen Form dem Querschnitt der Kerbe 27 angepaßt.

Die Anschlußstutzen 17 weisen einen ersten Abschnitt 35 auf, in dem sie sich von ihrem Ende her außen kegelartig erweitern und der in einer Stufe 36 in einen rohrförmigen zweiten Abschnitt 37 mit über die gesamte Länge konstantem Querschnitt übergeht. Damit die Form des Schlauches 18 im Bereich der Zunge 28 beibehalten werden kann, gehen der erste Abschnitt 35 und der zweite Abschnitt 37 in einem Quadranten, der dem jeweils anderen Anschlußstutzen und der Zunge 28 benachbart liegt, stufenlos ineinander über. In den beiden, dem besagten Quadranten benachbarten Quadranten nimmt die Höhe der Stufe 36 bis auf einen bestimmten Wert zu, den sie im letzten Quadranten beibehält.

Aufgrund der Zunge 28 läßt sich der Schlauch nur in einer solchen Weise am Spritzkopf 15 und am Anschlußstück 25 montieren, daß die Zunge 28 in die Kerbe 27 gelangt. Bei dem Versuch, den Schlauch 18 um 180° verdreht am Spritzkopf 15 oder am Anschlußstück 25 zu montieren, stößt Material des Schlauches gegen die Zunge 28, so daß die falsche Zuordnung zwischen Schlauch und Spritzkopf bzw. Anschlußstuck sofort beim Ansetzen des Schlauches bemerkt und korrigiert werden kann. Fehlmontagen sind somit weitgehend ausgeschlossen.

Aus den Figuren 1 und 7 ist noch ersichtlich, daß die Wischstange 13 teilweise mit einer Kunststoffummantelung 40 umgeben ist, an die an der Unterseite der Wischstange 13 einstückig ein Kanal zum Halten des Schlauches 18 angeformt ist. Wie man sowohl aus Figur 6 als auch aus Figur 7 ersieht, aber auch aus Figur 1 erschließen kann, ist die an dem Schlauch 18 entlanglaufende Kerbe 27 nach der Montage der Wischstange 13 zugekehrt und somit von außen nicht sichtbar. Entsprechend befindet sich die Zunge 28 des Spritzkopfes 15 zwischen Schlauch 18 und Wischstange 13, ist somit von außen ebenfalls nicht sichtbar und steht nicht über die Außenseite des Spritzkopfes 15 vor.

## Patentansprüche

1. Wisch- und Waschanlage, insbesondere für Scheiben von Kraftfahrzeugen, mit einem Schlauch (18) mit zwei voneinander getrennten Kanälen (19, 20), mit einem Spritzkopf (15) mit mindestens zwei Waschdüsen (16), von denen die eine an den einen Kanal (19, 20) und die andere an den anderen Kanal (19, 20) des Schlauches (18) angeschlossen ist, und mit einem Anschlußstück (25), von dem der Schlauch (18) ausgeht, dadurch gekennzeichnet, daß am Schlauch (18) einerseits und am Spritzkopf (15) und am Anschlußstück (25) andererseits Mittel (27, 28) zur Codierung der Verbindungen zwischen Schlauch (18) und Spritzkopf (15) sowie Schlauch (18) und Anschlußstück (25) vorgesehen sind.

2. Wisch- und Waschanlage nach Anspruch 1, dadurch gekennzeichnet, daß die Mittel (27, 28) zur Codierung zum Ineinandergreifen oder Aneinanderliegen in ihrer Form aufeinander abgestimmt sind.

3. Wisch- und Waschanlage nach Anspruch 1 oder 2, dadurch gekennzeichnet, daß der Schlauch (18) im Querschnitt eine Außenkontur besitzt, die ohne Symmetrie, insbesondere ohne zweizählige Symmetrie ist.

4. Wisch- und Waschanlage nach Anspruch 3, dadurch gekennzeichnet, daß die Symmetrie durch eine Kerbe (27) gestört ist, die in Längsrichtung des Schlauches (18) verläuft.

5. Wisch- und Waschanlage nach Anspruch 4, dadurch gekennzeichnet, daß sich die Kerbe (27) im Bereich eines Irennsteges (26) zwischen den beiden Kanälen (19, 20) des Schlauches (18) befindet.

6. Wisch- und Waschanlage nach Anspruch 4 oder 5, dadurch gekennzeichnet, daß der Schlauch (18) an einem Wischarm (10) entlang verlegt ist und daß die Seite des Schlauches (18), an der die Kerbe (27) entlangläuft, dem Wischarm (10) zugekehrt ist.

7. Wisch- und Waschanlage nach einem der Ansprüche 1 bis 6, dadurch gekennzeichnet, daß die Mittel (28) am Anschlußstück (25) und die Mittel (28) am Spritzkopf (15) die gleichen sind.

8. Wisch- und Waschanlage nach einem der Ansprüche 2 bis 7, dadurch gekennzeichnet, daß das Anschlußstück (25) oder der Spritzkopf (15) eine Zunge (28) aufweist, die sich längs am Anschlußstück (25) bzw. Spritzkopf (15) vorhandenen Anschlußstutzen (17) erstreckt.

9. Wisch- und Waschanlage nach Anspruch 8, dadurch gekennzeichnet, daß die Zunge (28) auf gleicher Höhe wie die Anschlußstutzen (17) endet.

10. Wisch- und Waschanlage nach Anspruch 8 oder 9, dadurch gekennzeichnet, daß die Zunge (28) in die Kerbe (27) des Schlauches (18) eingreift.

11. Wisch- und Waschanlage nach Anspruch 8, 9 oder 10, dadurch gekennzeichnet, daß die Anschlußstutzen (17) einen ersten Abschnitt (35) aufweisen, in dem sich ihr Außenumfang vergrößert und der in einer Stufe (36) in einen zweiten Abschnitt (37) mit einem im wesentlichen konstant bleibenden Außenumfang übergeht, und daß in einem der Zunge (28) benachbarten Bereich eines Anschlußstutzens (17) die Stufe (36) niedriger ist als in einem anderen Bereich oder erster und zweiter Abschnitt (35, 37) stufenlos ineinander übergehen.

## Claims

1. A wiper and washing system, especially for window panes of motor vehicles, including a tube (18) with two separate channels (19, 20), a nozzle head (15) with at least two washing nozzles (16), one of which is connected to the one channel (19, 20), while the other one is connected to the other channel (19, 20) of the tube (18), and a connecting piece (25), from which the tube (18) originates,
**characterized** in that means (27, 28) for coding the connections between tube (18) and nozzle head (15) and between tube (18) and connecting piece (25) are provided on the tube (18), on the one hand, and on the nozzle head (15) and the connecting piece (25), on the other hand.

2. A wiper and washing system as claimed in claim 1,
**characterized** in that the forms of the coding means (27, 28) for interconnecting the tube and the nozzle head or the connecting piece are adapted to mate.

3. A wiper and washing system as claimed in claim 1 or claim 2,
**characterized** in that the cross-section of the tube (18) has an outer contour which is asymmetrical, especially, is without double-counting symmetry.

4. A wiper and washing system as claimed in claim 3,
**characterized** in that the symmetry is interrupted by a groove (27) extending in a longitudinal direction with respect to the tube (18).

5. A wiper and washing system as claimed in claim 4,
**characterized** in that the groove (27) is located in the area of a separating web (26) between the two channels (19, 20) of the tube (18).

6. A wiper and washing system as claimed in claim 4 or claim 5,
**characterized** in that the tube (18) is installed along a wiper arm (10), and in that the side of the tube (18), along which the groove (27) extends, faces the wiper arm (10).

7. A wiper and washing system as claimed in any one of the claim 1 to 6,
**characterized** in that the coding means (28) on the connecting piece (25) is the same as the coding means (28) on the nozzle head (15).

8. A wiper and washing system as claimed in any one of the claim 2 to 7,
**characterized** in that the connecting piece (25) or the nozzle head (15) includes a lug (28) extending along the pipe union (17) on the connecting piece (25) or the nozzle head (15).

9. A wiper and washing system as claimed in claim 8,
**characterized** in that the lug (28) ends at the same level as the pipe unions (17).

10. A wiper and washing system as claimed in claim 8 or claim 9,
**characterized** in that the lug (28) engages into the groove (27) formed on the tube (18).

11. A wiper and washing system as claimed in claim 8, 9 or 10,
**characterized** in that the pipe unions (17) include a first section (35) in which their outer circumference is increased and which, via a step (36), passes into a second section (37) having an outer circumference which remains substantially constant, and in that in an area of a pipe union (17) adjacent to the lug (28), the step (36) is smaller than in another area, or the first section passes into the second section (35, 37) without a step.

## Revendications

1. Système d'essuie-glace/lave-glace, notamment pour vitres de véhicules automobiles, comportant un tuyau souple (18) contenant deux canalisations (19, 20) séparées l'une de l'autre, comportant une tête de projection (15) ayant au moins deux gicleurs de lavage (16), dont l'un est raccordé à l'une des canalisations (19, 20), et dont l'autre est raccordé à l'autre canalisation (19, 20) du tuyau souple (18), et comportant un embout de raccordement (25), depuis lequel s'étend le tuyau souple (18), caractérisé en ce que des moyens (27, 28) sont prévus sur le tuyau souple (18) d'une part, et sur la tête de projection (15) et sur l'embout de raccordement (25) d'autre part, pour réaliser un codage de la liaison entre le tuyau souple (18) et la tête de projection (15), et entre le tuyau souple (18) et l'embout de raccordement (25).

2. Système d'essuie-glace/lave-glace selon la revendication 1, caractérisé en ce que les moyens de codage (27, 28) sont ajustés les uns sur les autres dans leur forme, de sorte à s'emboîter les uns dans les autres ou à s'appuyer les uns sur les autres.

3. Système d'essuie-glace/lave-glace selon la revendication 1 ou 2, caractérisé en ce que le tuyau souple (18) présente, en section transversale, un contour extérieur asymétrique, notamment dépourvu de symétrie divisible par deux.

4. Système d'essuie-glace/lave-glace selon la revendication 3, caractérisé en ce que la symétrie est perturbée par une encoche (27) qui s'étend dans le sens longitudinal du tuyau souple (18).

5. Système d'essuie-glace/lave-glace selon la revendication 4, caractérisé en ce que l'encoche (27) se situe au niveau de la nervure de séparation (26) comprise entre les deux canalisations (19, 20) du tuyau flexible (18).

6. Système d'essuie-glace/lave-glace selon la revendication 4 ou 5, caractérisé en ce que le tuyau souple (18) est installé le long d'un bras d'essuie-glace (10), et en ce que le côté du tuyau souple (18), le long duquel s'étend l'encoche (27), est orienté face au bras d'essuie-glace (10).

7. Système d'essuie-glace/lave-glace selon l'une des revendications 1 à 6, caractérisé en ce que les moyens (28) prévus sur l'embout de raccordement (25) et les moyens (28) prévus sur la tête de projection (15) sont les mêmes.

8. Système d'essuie-glace/lave-glace selon l'une des revendications 2 à 7, caractérisé en ce que l'embout de raccordement (25) ou la tête de projection (15) comporte une languette (28) qui s'étend le long des tubulures de raccordement (17) respectivement présentes sur l'embout de raccordement (25) ou la tête de projection (15).

9. Système d'essuie-glace/lave-glace selon la revendication 8, caractérisé en ce que la languette (28) se termine à la même hauteur que les tubulures de raccordement (17).

10. Système d'essuie-glace/lave-glace selon l'une des revendications 8 ou 9, caractérisé en ce que la languette (28) s'engage dans l'encoche (27) du tuyau souple (18).

11. Système d'essuie-glace/lave-glace selon la revendication 8, 9 ou 10, caractérisé en ce que les tubulures de raccordement (17) comportent une première section (35), dans laquelle leur circonférence extérieure s'agrandit, et qui rejoint dans un gradin (36) une deuxième section (37) présentant une circonférence extérieure restant essentiellement constante, et en ce que, dans une zone adjacente à la languette (28) de la tubulure de raccordement (17), le gradin (36) est plus bas que dans une autre zone, où les première et deuxième sections (35, 37) se rejoignent sans gradation.
